Europäisches Patentamt

European Patent Office

Office européen des brevets

(11) Veröffentlichungsnummer: **0 195 478 B1**

(12) **EUROPÄISCHE PATENTSCHRIFT**

(45) Veröffentlichungstag der Patentschrift: **24.06.92**

(21) Anmeldenummer: **86200380.3**

(22) Anmeldetag: **10.03.86**

(51) Int. Cl.⁵: **H04J  3/06**

(54) **Verfahren und Schaltungsanordnung zur phasensprungfreien Durchschaltung von breitbandigen Digitalsignalen in einem synchronen Breitbandkommunikationsnetz.**

(30) Priorität: **16.03.85 DE 3509511**

(43) Veröffentlichungstag der Anmeldung:
**24.09.86 Patentblatt  86/39**

(45) Bekanntmachung des Hinweises auf die
Patenterteilung:
**24.06.92 Patentblatt  92/26**

(84) Benannte Vertragsstaaten:
**DE FR GB IT SE**

(56) Entgegenhaltungen:
**FR-A- 2 295 650**
**GB-A- 1 400 490**
**US-A- 3 134 962**
**US-A- 3 987 250**

**NET, Band 39, Nr. 1, 20.-21. Mai 1985, Seiten 20-25, München, DE; E. KNORPP et al.: "Die Evolution des ISDN zum breitbandigen Universalnetz"**

**PATENT ABSTRACTS OF JAPAN, Band 5, Nr. 59 (E-53)[731], 22. April 1981; & JP-A-56 10 755**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Krick, Wolfgang, Dipl.-Ing.**
**Gartenstrasse 15 b**
**W-8560 Lauf(DE)**

(74) Vertreter: **Peuckert, Hermann, Dipl.-Ing. et al**
**Philips Patentverwaltung GmbH Wendenstrasse 35 Postfach 10 51 49**
**W-2000 Hamburg 1(DE)**

## Beschreibung

Die Erfindung betrifft ein Verfahren zur phasensprungfreien Durchschaltung von breitbandigen Digitalsignalen in einem synchronen Breitbandkommunikationsnetz gemäß dem Oberbegriff des Patentanspruchs 1.

In zukünftigen integrierten Kommunikationsnetzen sind neue Dienste vorgesehen, die höhere Bandbreiten als die schmalbandigen ISDN-Dienste (Integrated Services Digital Network-Dienste) erfordern. Bildfernsprechen (Fernsehtelefon) erfordert eine Bandbreite von 5 MHz oder eine Übertragungsgeschwindigkeit von einigen Mbit/s bis einigen 10 Mbit/s je Kanal. Für den zuverlässigen Betrieb derartiger Breitbandnetze spielen Maßnahmen zur Synchronisation eine wichtige Rolle. Bei der Netzknoten-Synchronisierung wird zur Erzielung des Gleichlaufs ankommender Signale der für die Durchschaltung im betreffenden Netzknoten zentrale Netztakt verwendet. Bei der Quelle-Senke-Synchronisierung wird zur Ermöglichung eines vom Netztakt unabhängigen Takt-Gleichlaufs der Senke unter Verwendung eines Stopfverfahrens der Frequenzunterschied zwischen Quellen-Referenztakt und zentralen Netztakt z.B. als deltacodiertes Hilfssignal im Multiplexsignal zur Senke übertragen.

Bei einem Synchronismus per Verbindung wird der Quellentakt transparent durch das Netz zur Senke gereicht und bei einem Synchronismus per Netz wird der Takt für die Quellen vom Netz her geliefert. In Breitbandkommunikationsnetzen wird häufig der erste, teilnehmernahe Netzknoten noch gemeinsam für Breitband-und Schmalband-Übertragung genutzt. Der am Endpunkt der z.B. Lichtwellenleiter-Übertragungsstrecke liegende Netzknoten enthält einen Multiplexer/Demultiplexer, über welchen aus ein Zugang zur Breitbandkoppeleinrichtung, zur Fernsprech/Daten-(ISDN)-Koppeleinrichtung und zum Programmkoppler bei Verteilnetzen besteht. Mittels einer im Netzknoten angeordneten Steuerung werden die Breitbandkoppeleinrichtungen, die Fernsprech/Daten-(ISDN)-Koppeleinrichtungen und der Programmkoppler gesteuert. Von diesem gemeinsamen Netzknoten aus erfolgt die getrennte Übertragung der jeweiligen Digitalsignale im Breitband- und Schmalbandnetz. Für die Durchschaltung in der Breitbandkoppeleinrichtung wird häufig ein Raumvielfach-Koppelnetz und für die Fernsprech/Daten-(ISDN)-Koppeleinrichtung häufig ein Zeitvielfach-Koppelnetz benutzt. Für die Synchronisierung dieses Netzknotens wird über das Normalfrequenz-Verteilnetz diesem der zentrale Netztakt zugeführt. In der Zeitschrift net 39 (1985), Heft 1, Seiten 20 bis 25 ist die Systemarchitektur für ein Breitband-Kommunikationsnetz und der Aufbau einer Breitbandkoppeleinrichtung (Breitband-Koppelnetz) erläutert. Wie daraus hervorgeht, wird das bei Schmalband-Koppelnetzen (Fernsprech/Daten-(ISDN)-Koppeleinrichtung) zum Vermitteln angewandte Zeitmultiplexverfahren für Breitbandsignale bis 140 Mbit/s in absehbarer Zukunft nicht mit Vorteil anwendbar sein, da der Aufwand für Rahmen- und Taktphasensynchronisierung nicht kompensiert wird. Breitband-Koppelnetze werden also zunächst als Raumvielfach aufgebaut. Auf Seite 24 der oben genannten Literaturstelle ist der Aufbau eines asynchron betriebenen Raumvielfach-Koppelnetzes beschrieben.

Nach heutigem Stand der Technik (vergleiche beispielsweise auch Elektrisches Nachrichtenwesen, Band 58, Nr. 4, 1984, Seiten 450 bis 452) kommen als Breitband-Koppelnetz nur Raumvielfach-Koppelnetze in Betracht. Während Zeitvielfach-Koppelnetze eine synchrone Betriebsweise unter Verwendung des zentralen Netzknotentaktes (Amtstakt) erfordern, sind bei Raumvielfach-Koppelnetzen grundsätzlich die Alternativen synchrone Betriebsweise und asynchrone Betriebsweise möglich. Die synchrone Betriebsweise ist naheliegend im Hinblick auf ein taktsynchrones Breitbandnetz, bei dem sich die Netzknotentakte vom bereits bestehenden Normalfrequenz-Verteilnetz ableiten lassen. Die synchrone Betriebsweise mit gemeinsamer Taktung der Signale beim Durchlaufen des Koppelnetzes ist aber problematisch, da bei hohen Bitraten im räumlich ausgedehnten (mehrstufigen) Koppelnetz die phasenrichtige zentrale Netztaktzuführung aufwendige Abgleichmaßnahmen erfordert. In der oben genannten Literaturstelle in net 39 (1985), Heft 1, Seite 24 ist diesbezüglich ausgeführt, daß wegen der Ausdehnung der Koppelnetzanordnung und der hohen Bitrate der Breitbandsignale es nicht möglich ist, das Signal durch einen zentralen Takt an beliebiger Stelle mit geringem Aufwand zu regenerieren. Deshalb wird das Raumvielfach-Koppelnetz in asynchroner Betriebsweise mit individueller Taktbehandlung zur Regenerierung der Signale beim Durchlaufen des Koppelnetzes durch einen "takthaltigen" Leitungscode verwendet. Als "takthaltiger" Leitungscode wird 5B-6B benutzt, als Übertragungscode kann auch der vom CCITT empfohlene CMI-Schnittstellencode (Coded Mark Inversion) verwendet werden. Die asynchrone Betriebsweise des Raumvielfach-Koppelnetzes hat zwar den Vorteil der höheren Toleranz bezüglich Laufzeitschwankungen der Koppelnetz-Komponenten weist aber den Nachteil auf, daß sich nach Durchschalten einer Verbindung erst sämtliche nachfolgenden Takt-Regeneratoren derselben Hierarchistufe auf den neuen Takt synchronisieren müssen.

Sollen mehrere Digitalleitungen in einem digitalen Multiplexer zusammengefaßt werden, so werden hierfür asynchrone Multiplexer, welche mit einem Stopfverfahren arbeiten, benutzt (vergleiche ntz, Bd. 38, (1985), Heft 3, Seiten 140 bis 144).

In Zeitmultiplexvermittlungsstellen werden die aus einem synchronen Datennetz ankommenden Datensignale mit einem durch deren Schrittgeschwindigkeit bestimmten Takt in der Zeitmultiplexvermittlungsstelle übernommen und nach dem Durchschalten der Datensignale in der Zeitmultiplexvermittlungsstelle mit einem entsprechend höheren Takt weitergesendet. Treffen an der Schnittstelle zwischen Zeitmultiplexvermittlungsstelle und den Datenleitungen Takte aus verschiedenen und zur Taktquelle der Zeitmultiplexvermittlungsstelle plesiochronen Takt zusammen, so ist eine Taktanpassung durchzuführen. Aus der DE-AS 24 20 437 ist ein Verfahren zur Taktanpassung solcher plesiochronen Signale bekannt, bei dem die ankommenden Datensignale mit auf der Empfangsseite angeordneten Leitungsschaltungen zum Takt der Zeitmultiplexvermittlungsstelle eingephast werden. Auf der Ausgangsseite der Zeitmultiplexvermittlungsstelle werden mittels einem um deren Grundlaufzeit versetzten und zum Takt auf der Eingangsseite frequenzgleichen Takt die auszusendenden Daten erneut in das Taktraster der Zeitmultiplexvermittlungsstelle eingephast und weiter gesendet.

Der Erfindung liegt die Aufgabe zugrunde, in einem taktsynchronen Breitbandkommunikationsnetz mit asynchron betriebenen Raumvielfach-Koppelnetzen breitbandige Digitalsignale ohne Verwendung aufwendiger Stopfverfahren phasensprungfrei durchzuschalten.

Diese Aufgabe wird erfindungsgemäß durch ein Verfahren mit den Merkmalen des Patentanspruchs 1 gelöst.

Das erfindungsgemäße Verfahren weist den Vorteil auf, daß ein taktsynchrones Netz aufgebaut werden kann, bei dem in den Netzknoten Raumvielfach-Koppelnetze mit aynchroner Betriebsweise verwendet werden können. Die Taktanpassung der breitbandigen Digitalsignale an den zentralen Netztakt erfolgt nicht wie bei Zeitvielfach-Koppelnetzen auf der Eingangsseite sondern auf der Ausgangsseite des Raumvielfach-Koppelnetzes. Weiterhin weist das erfindungsgemäße Verfahren den Vorteil auf, daß an Stelle asynchroner Multiplexer (auch stopfende Multiplexer genannt) synchrone Multiplexer verwendet werden können. Durch die Umschaltung auf ein breitbandiges, netzsynchrones Signal bei fehlendem breitbandigem Digitalsignal wird stets auf der Digitalleitung eine Taktinformation übertragen.

Die Schaltungsanordnung gemäß Patentanspruch 2 weist den Vorteil auf, daß der elastische Speicher die Aufgabe des Ausgleichs von "Wander" (langsame Phasenschwankungen), entstehend z.B. in Folge des Temperaturunterschieds der Digitalleitungen und der Schaltungskomponenten im Raumvielfach-Koppelnetz, mit übernehmen kann, so daß ein auf der Eingangsseite des Raumvielfach-Koppelnetzes angeordneter Pufferspeicher hierfür sich erübrigt. Die Pufferspeicher müssen so dimensioniert werden, daß Laufzeitschwankungen zwischen dem zugeführten zentralen Netztakt und dem Takt der ankommenden Signale ausgeglichen werden. Die Größe des "Wanders" läßt sich für den ungünstigsten Fall einer Verbindung zwischen Knoten der obersten Netzhierarchieebene mit etwa 3...4 s abschätzen. Um diesen vollständig aufzufangen, müßte die Pufferlänge dem zweifachen Wert des "Wanders" entsprechen, was bei einer Bitrate von 140 Mbit/s zu einer Speichergröße von etwa 1.000 Bit führt. Wird der elastische Speicher zum Beginn einer Verbindung auf mittleren Füllgrad eingestellt, so kann eine wesentlich kleinere Speichergröße verwendet werden, da eine Verschiebung durch "Wander" während einer bestehenden Verbindung nur sehr langsam erfolgt.

Aus Frequenz 38 (1984), 9, Seiten 217 bis 223, insbesondere Seite 122, linke Spalte ist es bekannt in nutzungsfreien Zeiten in die Digitalleitung ein Ersatzsignal einzuspeisen. Eine Anregung für eine phasensprungfreie Umschaltung ist hieraus nicht entnehmbar.

Die Schaltungsanordnung gemäß Patentanspruch 3 weist den Vorteil auf, daß bei Ausfall einer Digitalleitung eine phasensprungfreie Umschaltung auf eine Ersatzleitung vorgenommen werden kann.

Das erfindungsgemäße Verfahren wird für zwei in der Zeichnung dargestellte Anwendungsfälle näher beschrieben und erläutert. Es zeigt:

Fig. 1     eine an den Koppelnetzausgängen angeordnete Schaltungsanordnung und

Fig. 2     eine Ersatzweg-Umschaltung unter Anwendung des erfindungsgemäßen Verfahrens.

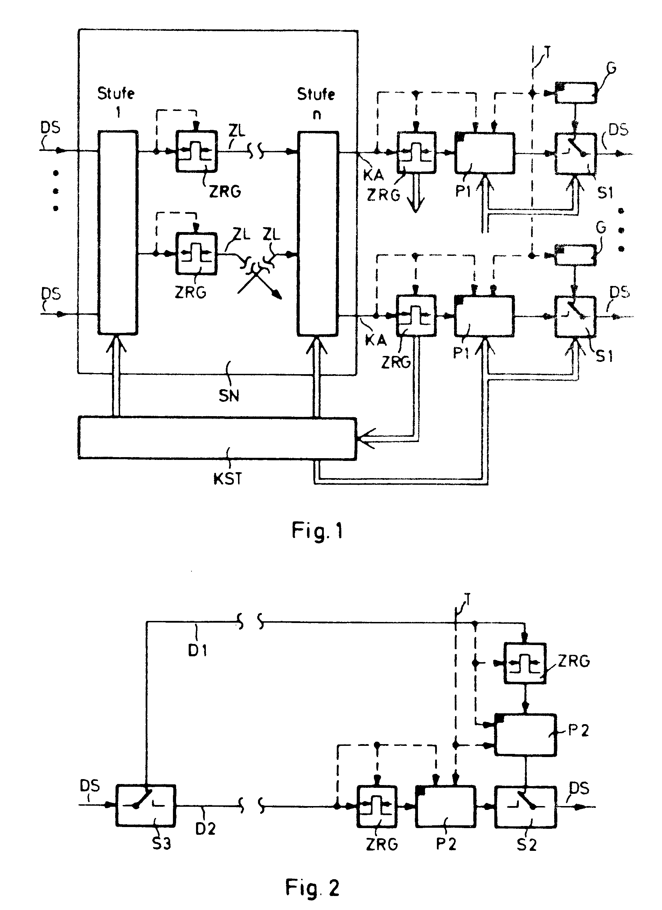

Bei dem in Fig. 1 dargestellten Netzknoten sind die für die ordnungsgemäße Betriebsweise des Netzknotens erforderlichen Einrichtungen, welche nicht vom erfindungsgemäßen Verfahren unmittelbar berührt werden, nicht eingezeichnet. Zur Vermeidung der phasengenauen Taktzuführung bei hohen Bitraten, insbesondere bei einem großen Koppelnetz SN mit umfangreicher Zwischenleitungsverdrahtung ZL, ist das Koppelnetz SN als Raumvielfach-Koppelnetz mit asynchroner Betriebsweise ausgeführt. Wie in der Fig. 1 angedeutet, ist zur Signalregeneration am Ausgang jeder Stufe ein Regenerator ZRG mit individueller Taktableitung angeordnet. Beim erfindinngsgemäßen Verfahren erfolgt die Taktanpassung der breitbandigen Digitalsignale DS an den zentralen Netztakt T nicht, wie beim synchron betriebenen Raumvielfach-Koppelnetz, auf der Eingangsseite sondern auf der Ausgangsseite des asynchron betriebenen Raumvielfach-Koppelnetzes SN. Die in den Ausgangsleitungen des Raumvielfach-Koppelnetzes SN angeordneten Einrichtungen (elastischer Speicher P1 und Umschalter S1) sorgen dafür, daß unabhängig von den beiden Schaltzuständen "Durchgeschaltet" oder "Nicht-Durchgeschaltet" ein netztaktsynchrones Signal ohne Phasensprung übertragen wird. Die Leitungen, über welche Takte übertragen werden, sind in Fig. 1 strichliniert und die Steuerleitungen durch Pfeile dargestellt.

Mit jeder am Koppelnetzausgang KA angeordneten Taktrückgewinnungsschaltung ZRG ist ein elastischer Speicher P1 verbunden, bei dem die breitbandigen Digitalsignale DS mit dem individuell regenerierten Takt des im Koppelnetz durchgeschalteten Nutzsignals (breitbandiges Digitalsignal) eingelesen und mit dem zentralen Netztakt T ausgelesen werden. Mittels des Umschalters S1 kann für den Zustand "Nicht-Durchgeschaltet" eine phasensynchrone Umschaltung vom Nutzsignal auf ein zentral getaktes Ruhesignal, welches vom Generator G erzeugt wird, vorgenommen werden. Die Umschaltung erfolgt aufgrund eines Steuerbefehls einer Koppelnetzsteuerung KST. Bei der in der Zeichnung dargestellten Ausführungsform ist der Generator G als Speicher ausgeführt und der Speicherinhalt wird mit dem zentralen Netztakt T, welcher auch den elastischen Speichern P1 zugeführt, zyklisch ausgelesen.

Da die Koppelnetz-Stufen wie Leitungsabschnitte behandelt werden und eine individuelle Taktrückgewinnung mit entsprechender Signalregeneration vorgenommen wird, kann der elastische Speicher P1 auch die Aufgabe des Ausgleichs von "Wander", der außer auf der Eingangsleitung zusätzlich im Koppelnetz SN akkumuliert wird, mit übernehmen, so daß sich ein eingangsseitiger Pufferspeicher hierfür erübrigt. Dadurch können auch Jitter und "Wander", welche im Koppelnetz SN selbst entstehen, ausgeglichen werden. Da die Verschiebung durch "Wander" nur sehr langsam erfolgt, läßt sich selbst bei einer kleinen Speichergröße für den elastischen Speicher P1 ein Schlupf (Verlust oder Einschieben eines oder mehrerer aufeinanderfolgender Bits in ein Binärsignal) während der ersten Dauer einer Verbindung vermeiden. Hierzu wird der Lesezeiger des elastischen Speichers P1 immer zu Beginn einer Verbindung entsprechend einem mittleren Füllgrad eingestellt.

In Fig. 2 ist die Ersatzweg-Umschaltung unter Anwendung des erfindungsgemäßen Verfahrens für Digitalleitungen D1, D2... dargestellt. Solche Digitalleitungen sind zwischen Ortsvermittlung und Durchgangsvermittlung oder zwischen zwei Durchgangsvermittlungen angeordnet. Am Leitungsende jeder der parallel verlaufenden Digitalleitungen D1, D2 kann ein elastischer Speicher P2 angeordnet werden, dessen Eingang mit dem am Leitungsende angeordneten Regenerator ZRG verbunden ist und dessen Ausgang mit einem Umschalter S2 verbunden ist. Mittels der Umschalter S2 und S3 kann nun aufgrund eines Steuerbefehls ausgehend von einer Vermittlungseinrichtung die Umschaltung zwischen den Digitalleitungen D1, D2 vorgenommen werden.

Durch das erfindungsgemäße Verfahren ist es möglich, ein synchrones Breitbandkommunikationsnetz mit asynchron betriebenen Raumvielfach-Koppelnetzen SN aufzubauen und breitbandige Digitalsignale DS phasensprungfrei durchzuschalten.

**Patentansprüche**

1. Verfahren zur phasensprungfreien Durchschaltung von breitbandigen Digitalsignalen in einem synchronen Breitbandkommunikationsnetz mit asynchron betriebenen Raumvielfach-Koppelnetzen, bei dem die breitbandigen Digitalsignale individuell regeneriert werden und das regenerierte, breitbandige Digitalsignal DS einem elastischen Speicher (P1, P2) zugeführt wird, wobei das Einlesen mit dem regenerierten Takt und das Auslesen mit dem zentralen Netztakt (T) erfolgt,
dadurch gekennzeichnet,
daß bei fehlendem breitbandigen Digitalsignal (DS) eine Umschaltung auf ein breitbandiges und netzsynchrones Ersatzsignal erfolgt, so daß die Netztaktinformation ununterbrochen bis zum Eintreffen eines neuen Digitalsignals übertragen wird.

2. Schaltungsanordnung zur Durchführung des Verfahrens zur phasensprungfreien Durchschaltung von breitbandigen Digitalsignalen in einem synchronen Breitbandkommunikationsnetz mit asynchron betriebenen Raumvielfach-Koppelnetzen, bei dem die breitbandigen Digitalsignale individuell regeneriert werden und das regenerierte, breitbandige Digitalsignal DS einem elastischen Speicher (P1, P2) zugeführt wird, wobei das Einlesen mit dem regenerierten Takt und das Auslesen mit dem zentralen Netztakt (T) erfolgt, wobei bei fehlendem breitbandigen Digitalsignal (DS) eine Umschaltung auf ein breitbandiges und netzsynchrones Ersatzsignal erfolgt, so daß die Netztaktinformation ununterbrochen bis zum Eintreffen eines neuen Digitalsignals übertragen wird, nach Anspruch 1,
dadurch gekennzeichnet,
daß mit jeder am Koppelnetzausgang (KA) angeordneten Taktrückgewinnungsschaltung (ZRG) ein elastischer Speicher (P1) verbunden ist, daß mit dem Ausgang des elastischen Spreichers (P1) ein Umschalter (S1) verbunden ist, welcher aufgrund eines Steuerbefehls einer Koppelnetzsteuerung (KST) auf einen Generator (G) umschaltet und daß der zentrale Netzakt (T) sowohl dem Generator (G) als auch dem Pufferspeicher (P1) zugeführt wird.

3. Schaltungsanordnung zur Durchführung des Verfahrens zur phasensprungfreien Durchschaltung von breitbandigen Digitalsignalen in einem synchronen Breitbandkommunikationsnetz mit asynchron betriebenen Raumvielfach-Koppelnetzen, bei dem die breitbandigen Digitalsignale individuell regeneriert werden und das regenerierte, breitbandige Digitalsignal DS einem elastischen Speicher (P1, P2) zugeführt wird, wobei das Einlesen mit dem regenerierten Takt und das Auslesen mit dem zentralen Netztakt (T) erfolgt, wobei bei fehlendem breitbandigen Digitalsignal (DS) eine Umschaltung auf ein breitbandiges und netzsynchrones Ersatzsignal erfolgt, so daß die Netztaktinformation ununterbrochen bis zum Eintreffen eines neuen Digitalsignals übertragen wird, nach Anspruch 1,
dadurch gekennzeichnet,
daß in parallel verlaufenden Digitalleitungen (D1, D2), welche zwischen Ortsvermittlungen und Durchgangsvermittlungen oder zwischen zwei Durchgangsvermittlungen angeordnet sind, die elastischen Speicher (P2) angeordnet sind, deren Eingänge mit den am Leitungsende angeordneten Regeneratoren (ZRG) verbunden sind und daß die Ausgänge der elastischen Speicher (P2) mit einem Umschalter (S2) verbunden sind, welcher aufgrund eines Steuerbefehls einer Vermittlungseinrichtung eine Umschaltung zwischen den Digitalleitungen (D1, D2) vornimmt.

**Claims**

1. Method of through-switching broad-band digital signals without phase jumps in a synchronous broad-band communication network comprising asynchronously operated space-division multiplex switching networks, in which the broad-band digital signals are regenerated individually and the regenerated broad-band digital signal DS is applied to an elastic store (P1, P2), the writing being effected with the regenerated clock and the reading being effected with the central network clock (T), characterized in that a change-over is made to a broad-band and network-synchronous substitute signal when the broad-band digital signal (DS) is lacking, so that the network clock information is transmitted uninterruptedly until the arrival of a new digital signal.

2. Circuit arrangement for effecting the method of through-switching broad-band digital signals without phase jumps in a synchronous broad-band communication network comprising asynchronously operated space-division multiplex switching networks, in which the broad-band digital signals are regenerated individually and the regenerated broad-band digital signal DS is applied to an elastic store (P1, P2), the writing being effected with the regenerated clock and the reading being effected with the central network clock (T), a change-over being made to a broad-band and network-synchronous substitute signal when the broad-band digital signal (DS) is lacking, so that the network clock information is transmitted uninterruptedly until the arrival of a new digital signal, as claimed in Claim 1, characterized in that an elastic store (P1) is connected to each clock recovery circuit (ZRG) arranged at the switching network output (KA), in that the output of the elastic store (P1) is connected to a change-over switch (S1) which switches to a generator (G) in response to a control command from a switching network control (KST), and in that the central network clock (T) is applied to both the generator (G) and the elastic store (P1).

3. Circuit arrangement for effecting the method of through-switching broad-band digital signals without phase jumps in a synchronous broad-band communication network comprising asynchronously operated space-division multiplex switching networks, in which the broad-band digital signals are regenerated individually and the regenerated broad-band digital signal DS is applied to an elastic store (P1, P2), the writing being effected with the regenerated clock and the reading being effected with the central network clock (T), a change-over being made to a broad-band and network-synchronous substitute signal when the broad-band digital signal (DS) is lacking, so that the network clock information is transmitted uninterruptedly until the arrival of a new digital signal, as claimed in Claim 1, characterized in that the elastic stores (P2) are arranged in parallel digital lines (D1, D2), connected between local exchanges and transit exchanges or between two transit exchanges, the elastic store inputs being connected to the regenerators (ZRG) arranged at the line end, and in that the outputs of the elastic stores (P2) are connected to a change-over switch (S2) which effects a switch between the digital lines (D1, D2) in response to a control command from a switching network control.

**Revendications**

1. Procédé pour la commutation sans saut de phase de signaux numériques à large bande dans un réseau de communication à large bande synchrone comprenant des interfaces de multiplexage spatial à fonctionnement asynchrone, suivant lequel les signaux numériques à large bande sont régénérés individuellement et le signal numérique à large bande régénéré (DS) est appliqué à une mémoire élastique (P1, P2), l'enregistrement étant réalisé au rythme régénéré et l'extraction au rythme de réseau central (T), caractérisé en ce qu'en l'absence de signal numérique à large bande (DS) a lieu une commutation sur un signal de remplacement à large bande et synchronisé avec le réseau, de sorte que l'information de rythme de réseau est transmise sans interruption jusqu'à l'arrivée d'un nouveau signal numérique.

2. Montage de circuit destiné à l'exécution du procédé pour la commutation sans saut de phase de signaux numériques à large bande dans un réseau de communication à large bande synchrone comportant des interfaces de multiplexage spatial à fonctionnement asynchrone, dans lequel les signaux numériques à large bande sont régénérés individuellement et le signal numérique à large bande régénéré (DS) est appliqué à une mémoire élastique (P1, P2), l'enregistrement étant réalisé au rythme régénéré et l'extraction au rythme de réseau central (T), et, en l'absence du signal numérique à large bande (DS) a lieu une commutation sur un signal de remplacement à large bande et synchronisé avec le réseau, de sorte que l'information de rythme de réseau est transmise sans interruption jusqu'à l'arrivée d'un nouveau signal numérique, suivant la revendication 1, caractérisé en ce qu'à chaque circuit de récupération de rythme (ZRG) disposé à la sortie de l'interface (KA) est connectée une mémoire élastique (P1), qu'à la sortie de la mémoire élastique (P1) est connecté un commutateur (S1) qui, sur base d'une instruction de commande d'une commande d'interface (KST), commute sur un générateur (G) et que le rythme de réseau central (T) est appliqué tant au générateur (G) qu'à la mémoire tampon (P1).

3. Montage de circuit pour l'exécution du procédé pour la commutation sans saut de phase de signaux numériques à large bande dans un réseau de communication à large bande synchrone comportant des interfaces de multiplexage spatial à fonctionnement asynchrone dans lequel les signaux numériques à large bande sont régénérés individuellement et le signal numérique à large bande régénéré (DS) est appliqué à une mémoire élastique (P1, P2), l'enregistrement étant réalisé au rythme régénéré et l'extraction au rythme de réseau central (T), et en l'absence de signal numérique à large bande (DS) a lieu une commutation sur un signal de remplacement à large bande et synchronisé avec le réseau, de sorte que l'information de rythme de réseau est transmise sans interruption jusqu'à l'arrivée d'un nouveau signal numérique, suivant la revendication 1, caractérisé en ce que, dans des lignes de signaux numériques parallèles (D1, D2), qui s'étendent entre des centraux urbains et des centraux de transit ou entre deux centraux de transit, sont disposées les mémoires élastiques (P2), dont les entrées sont connectées aux régénérateurs (ZRG) situés à l'extrémité de ligne et que les sorties des mémoire élastiques (P2) sont connectées à un commutateur (S2) qui assure, sur base d'une instruction de commande d'un central, une commutation entre les lignes de signaux numériques (D1, D2).

Fig. 1

Fig. 2